# EUROPÄISCHE PATENTSCHRIFT

(11) **EP 2 213 210 B1**
(45) Veröffentlichungstag und Bekanntmachung des Hinweises auf die Patenterteilung: **03.10.2012**
(21) Anmeldenummer: 10151080.8
(22) Anmeldetag: 19.01.2010
(51) Int. Cl.: A47J 31/36

(54) **Brüheinheit**
Brewing unit
Unité d'échaudage

(30) Priorität: 02.02.2009 DE 202009000075 U
(43) Veröffentlichungstag der Anmeldung: 04.08.2010
(73) Patentinhaber: WIK Far East Ltd., North Point, Hong Kong (CN)
(72) Erfinder: Becker, Dietmar, 42477 Radevormwald (DE); Golik, Wolfgang, 45475 Mühlheim a. d. Ruhr (DE); Lüke, Werner, 44879 Bochum (DE)
(74) Vertreter: Haverkamp, Jens

(56) Entgegenhaltungen:
- EP-A1- 0 659 377
- EP-A1- 1 483 992
- DE-A1- 19 841 880
- DE-U1-202007 001 176

## Beschreibung

Die Erfindung betrifft eine Brüheinheit für eine Kaffeemaschine, umfassend einen in Richtung der Längsachse der Brüheinheit bewegbar durch einen Spindelantrieb angetriebenen Brühzylinder, welcher Spindelantrieb über eine parallel und mit Abstand zur Längsachse des Brühzylinders angeordnete Gewindespindel verfügt, deren Gewinde kämmend ein dem Brühzylinder zugeordnetes Abtriebselement zum Bewegen desselben angeordnet ist, sowie eine parallel und mit Abstand zur Gewindespindel angeordnete Führungsstange mit einer dem Brühzylinder zugeordneten und darauf verschiebbaren Führungshülse.

Kaffeemaschinen, mit denen portionsweise, vor allem tassenweise frisch gebrühter Kaffee bereitet werden kann, verfügen zum Aufbrühen des Kaffees über eine Brüheinheit. Die Brüheinheit selbst umfasst einen Brühzylinder, in den nach dem Starten eines Brühzyklusses gemahlenes Kaffeepulver eingebracht, verdichtet und anschließend Heißwasser in den verdichteten Filterkuchen eingebracht wird. Über eine Auslaufleitung wird das gebrühte Kaffeegetränk aus der Brüheinheit heraus und in ein Trinkgefäß eingeleitet. Nach Ausgabe des gewünschten Kaffeegetränks wird der ausgelaugte Filterkuchen aus dem Brühzylinder entfernt. Eine solche Brüheinheit ist aus DE 20 2007 001 176 U1 bekannt. Die in diesem Dokument beschriebene Brüheinheit verfügt über einen in längsaxialer Richtung bewegbaren Brühzylinder. Angetrieben ist der Brühzylinder durch einen Spindelantrieb, dessen Gewindespindel parallel und mit Abstand zur Längsachse des Brühzylinders und daher radial zu diesem angeordnet ist. Auf der Gewindespindel sitzt ein das Gewinde der Gewindespindel kämmendes Abtriebselement, welches an dem Brühzylinder angeschlossen ist. In Abhängigkeit von der Drehrichtung der Gewindespindel wird somit der Brühzylinder in längsaxialer Richtung in die eine oder die andere Richtung bewegt. Zur Drehentkopplung und Führung des Brühzylinders verfügt diese Brüheinheit über eine diametral in Bezug auf die Längsachse des Brühzylinders angeordnete Führungsstange. Auf dieser sitzt in längsaxialer Richtung des Brühzylinders verschiebbar eine an den Brühzylinder angeschlossene Führungshülse. Die Führungsstange befindet sich somit ebenfalls in einer radialen Anordnung zu dem Brühzylinder. Die Führungsstange ist mit ihren beiden Enden jeweils in einer gehäuseseitigen Muffe der Brüheinheit gehalten.

Diese vorbekannte Brüheinheit ist konzipiert, um in dem Gehäuse mit den notwendigen Antriebsaggregaten einer Kaffeemaschine mit seiner Längsachse horizontal ausgerichtet angeordnet zu sein. Die Brüheinheit ist mit ihrer Längserstreckung in Richtung der Tiefe der Kaffeemaschine in dieser angeordnet. Um die Bautiefe einer solchen Kaffeemaschine möglichst gering zu halten, ist man bestrebt, die Brüheinheit hinsichtlich ihrer Längserstreckung möglichst kompakt bauend auszulegen.

Infolge der radialen Anordnung der Gewindespindel mit dem darauf kämmenden Abtriebselement ist es erforderlich, die Führung zwischen der brühzylinderseitigen Führungshülse und der gegenüber diesem ortsfesten Führungsstange sehr präzise auszubilden, um antriebsbedingte Kippbewegungen des Brühzylinders möglichst zu vermeiden. Derartige Verstellbewegungen des Brühzylinders infolge seines Antriebes erhöhen nicht nur die Reibung zwischen der Führungshülse und der Führungsstange, sondern auch diejenige zwischen der inneren Mantelfläche des Brühzylinders und den feststehenden auslaufseitigen Kolben, wenn dieser in die Brüheinheit eingeführt ist. Um dieses zu kompensieren, muss der die Gewindespindel antreibende Elektromotor entsprechend stark ausgelegt sein. Bei dem Brühzylinder handelt es sich typischerweise um ein Kunststoffspritzgussteil. Daher können an die Maßhaltigkeit der inneren Mantelfläche der Führungshülse keine allzu hohen Anforderungen gestellt werden. Beim Gegenstand der aus DE 20 2007 001 176 U1 bekannten Brüheinheit verfügt die Führungshülse über einen entsprechend maßhaltig gefertigten Führungseinsatz. Eine solche Ausgestaltung ist jedoch aufwändig in der Herstellung.

Vor dem vorstehend aufgezeigten Hintergrund liegt der Erfindung daher die Aufgabe zugrunde, eine eingangs genannte, gattungsgemäße Brüheinheit dergestalt weiterzubilden, dass diese unter Einhaltung der an die Führung des Brühzylinders gestellten Anforderungen und grundsätzlich ohne die Länge der Brüheinheit vergrößern zu müssen, einfacher und daher kostengünstiger in der Herstellung ist.

Gelöst wird diese Aufgabe erfindungsgemäß durch eine eingangs genannte, gattungsgemäße Brüheinheit, bei der der Brühzylinder zusätzlich zu seiner Führungshülse an seiner äußeren Mantelfläche wenigstens ein sich an der Führungsstange bezogen auf ihren Umfang nur abschnittsweise abstützendes Führungselement trägt.

Diese Brüheinheit verfügt neben ihrer Führungshülse über ein oder mehrere zusätzliche Führungselemente, die sich im Unterschied zu der Ausgestaltung der Führungshülse bezogen auf den Umfang der Führungsstange nur abschnittsweise an dieser abstützen, diese mithin nicht umfänglich kontaktieren. Gemäß einem Ausführungsbeispiel ist vorgesehen, dass sich das zumindest eine weitere Führungselement nur im Bereich eines schmalen Abschnittes und damit einseitig an der Führungsstange abstützt. Die Abstützung erfolgt typischerweise an der zu dem Brühzylinder weisenden Mantelfläche der Führungsstange. Diese Abstützung gestattet es, ohne die Baulänge der Brüheinheit zu verlängern, eine Führung zu konzipieren, bei der letztendlich die gesamte Länge der Führungsstange genutzt werden kann, insbesondere auch diejenigen Abschnitte der Führungsstange, mit denen diese in ihrer endseitig angeordneten Haltemuffen eingreift. Diese Haltemuffen verfügen bei einer Ausgestaltung einer einseitigen Abstützung, wie vorbeschrieben, zum Ausnutzen der gesamten Länge der Führungsstange als Führungselement gemäß einem Ausführungsbeispiel über einen Schlitz, der es ermöglicht, dass ein solches, dem Brühzylinder zugeordnetes Führungselement bei entsprechender Stellung des Brühzylinders in seiner Abstützanordnung an der Führungsstange diese auch in demjenigen Abschnitt kontaktieren kann, in dem die Führungsstange in die Muffe eingreift. Somit kann bei dieser Konzeption im Wesentlichen die gesamte Länge des Brühzylinders für die Führungszwecke ausgenutzt werden, ohne dass es erforderlich wäre, die Länge der Brüheinheit zu vergrößern.

Zweckmäßigerweise ist das zumindest eine zusätzliche Führungselement als Führungsschiene ausgeführt, die unter Ausbildung eines Linienkontaktes an der Führungsstange abgestützt ist. Die Führungshülse der Brüheinheit braucht bei einer solchen Ausgestaltung nicht länger zu sein als die aus DE 20 2007 001 176 U1 bekannte. Vielmehr kann die Führungshülse bei der neu konzipierten Brüheinheit grundsätzlich auch kürzer bemessen sein. Bei einem Brühzylinder, der im Wege eines Kunststoffspritzgussverfahrens oder eines Kunststoffpressverfahrens hergestellt worden ist, bringt dieses Vorteile bei dem Vorgang des Entformens der Führungshülse.

Nachfolgend ist die Erfindung anhand eines Ausführungsbeispiels unter Bezugnahme auf die beigefügten Figuren beschrieben. Hieraus ergeben sich weitere Vorteile und vorteilhafte Weiterbildungen der beanspruchten Brüheinheit. Es zeigen:
- **Fig. 1:**: eine perspektivische Ansicht einer Brüheinheit,
- **Fig. 2:**: eine Einsicht in einen Ausschnitt der Brüheinheit der Figur 1 von oben,
- **Fig. 3:**: einen Querschnitt durch die Brüheinheit der Figur 1 entlang der Linie A-B der Figur 2,
- **Fig. 4:**: einen Querschnitt durch die Brüheinheit der Figur 1 entlang der Linie C-D der Figur 2,
- **Fig. 5:**: eine perspektivische Ansicht des Brühzylinders der Brüheinheit der vorstehenden Figuren,
- **Fig. 6:**: einen Längsschnitt durch die Brüheinheit der Figur 1 und
- **Fig. 7:**: eine weitere Teileinsicht in die Brüheinheit der Figur 1.

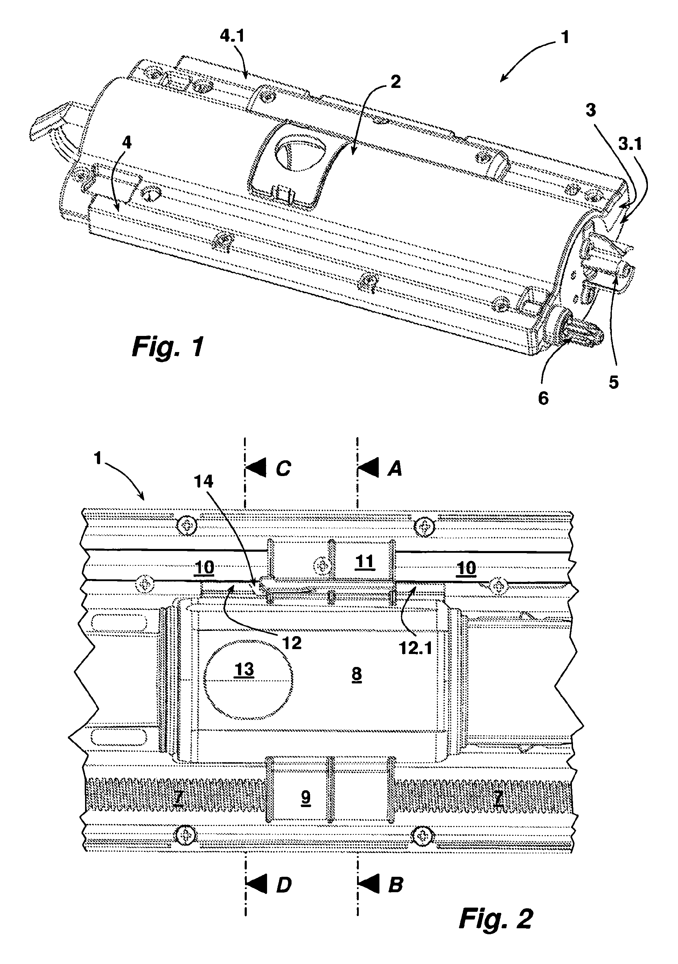

Eine Brüheinheit 1 für eine in den Figuren nicht näher dargestellte, als Vollautomat konzipierte Kaffeemaschine verfügt bei dem dargestellten Ausführungsbeispiel über ein zweischaliges Gehäuse 2. Die beiden Gehäuseschalen sind mit den Bezugszeichen 3 sowie 3.1 gekennzeichnet. Die Brüheinheit 1 ist konzipiert, um in horizontaler Richtung in eine Kaffeemaschine eingesetzt und umgekehrt aus dieser herausgenommen werden zu können. Zu diesem Zweck ist das Gehäuse 2 zur Ausbildung von seitlichen Führungsleisten 4, 4.1 ausgebildet, die in entsprechende Nuten einer Brüheinheitaufnahme der Kaffeemaschine eingreifen. Die Brüheinheit 1 verfügt an ihrem in Figur 1 rechten Stirnseite über ein Kupplungsstück 5, über welches Heißwasser der Brüheinheit 1 zugeführt wird. Darüber hinaus verfügt die Brüheinheit 1 über einen Spindelantrieb mit einer drehbar gelagerten Gewindespindel. Auf der Gewindespindel sitzt drehmomentschlüssig mit dieser verbunden an einem Ende ein gezahntes Kupplungsstück 6, welches bei in die Kaffeemaschine eingesetzter Brüheinheit 1 mit einem komplementären Kupplungsstück in Eingriff steht, um die Gewindespindel rotatorisch in die eine oder andere Richtung anzutreiben.

Die Gewindespindel 7 ist in der in Figur 2 gezeigten Einsicht in die Brüheinheit 1 erkennbar. In einer radialen Anordnung zu der Gewindespindel 7 ist innerhalb der Brüheinheit 1 ein Brühzylinder 8 in längsaxialer Richtung bewegbar angeordnet. Angeformt an den Brühzylinder 8 befindet sich ein Abtriebselement 9, welches das Gewinde der Gewindespindel 7 kämmt. Bei einer Drehbewegung der Gewindespindel 7 wird somit das Abtriebselement 9 und damit der Brühzylinder 8 in Abhängigkeit von der Drehrichtung der Gewindespindel 7 in die eine oder die andere Richtung bewegt. Die Bewegung des Brühzylinders 8 ist zum Durchlaufen eine Brühzyklusses erforderlich. Im Rahmen eines solchen Brühzyklusses wird innerhalb des Brühzylinders 8 durch die der Brüheinheit 1 zugeordneten Kolben eine Brühkammer ausgebildet, in der sich das zuvor darin eingebrachte Kaffeepulver befindet.

Zur Führung des Brühzylinders 8 dient neben dem an der Gewindespindel 7 geführten Abtriebselement 9 eine in dem Gehäuse 2 der Brüheinheit 1 gehaltene Führungsstange 10. Bei der Führungsstange 10 handelt es sich bei dem dargestellten Ausführungsbeispiel um ein zylindrisches Metallrohr. Die Führungsstange 10 befindet sich bei dem dargestellten Ausführungsbeispiel in einer in Bezug auf die Längsachse des Brühzylinders 8 der Gewindespindel 7 diametral gegenüberliegende Anordnung. Somit befinden sich die Gewindespindel 7 und die Führungsstange 10 in einer radialen Anordnung zu dem Brühzylinder 8.

Der als Kunststoffspritzgussteil gefertigte Brühzylinder 8 verfügt als geführtes Element über eine die Führungsstange 10 einfassende Führungshülse 11. Die Führungshülse 11 ist an die äußere Mantelfläche des Brühzylinders 8 angeformt. Zur weiteren Führung des Brühzylinders und zum Abfangen von Kippmomenten infolge des außermittigen Antriebs des Brühzylinders 8 über das radial zu diesem vorgesehene Abtriebselement 9 verfügt der Brühzylinder 8 über zwei der Längserstreckung des Brühzylinders 8 und der Führungshülse 11 folgende Führungsschiene 12, 12.1. Zusammen mit der Führungshülse 11 ist der Brühzylinder 8 mittels der Führungsschienen 12, 12.1 im Wesentlichen über seine gesamte Längserstreckung an der Führungsstange 10 geführt. Die Führungsschienen 12, 12.1 liegen an der zu dem Brühzylinder 8 weisenden Mantelfläche der Führungsstange 10 an. Die in Figur 2 gezeigte Führung des Brühzylinders 8 an der Führungsstange 10 macht deutlich, dass es für das Abfangen von Kippmomenten grundsätzlich nicht erforderlich ist, dass die Führungsschienen 12, 12.1 durchgängig sind. Vielmehr ist für das Abfangen derartiger antriebsbedingter Kippmomente und damit für die Führung des Brühzylinders 8 das Vorhandensein eines oder mehrerer Führungselemente mit einem möglichst großen Abstand voneinander ausreichend.

Die in Figur 2 gezeigte Einsicht in die Brüheinheit 1 zeigt, dass der Brühzylinder 8 oberseitig über eine Kaffeepulvereinfüllöffnung 13 verfügt. Zwischen der Führungsschiene 12 und der Führungshülse 11 ist eine Aussparung 14 vorgesehen, damit Kaffeepulver, welches nicht durch die Kaffeepulvereinfüllöffnung 13 in das Innere des Brühzylinders 8 gelangt ist, nicht auf der in Figur 2 sichtbaren Oberseite der Führungsleiste 12 in unmittelbarer Nachbarschaft zu der diesseitigen Mündung der Führungshülse 11 zur Ablagerung gelangt. Hierdurch wird verhindert, dass bei einem Bewegen des Brühzylinders 8 Kaffeepulver in die Führungshülse 11 eingebracht wird.

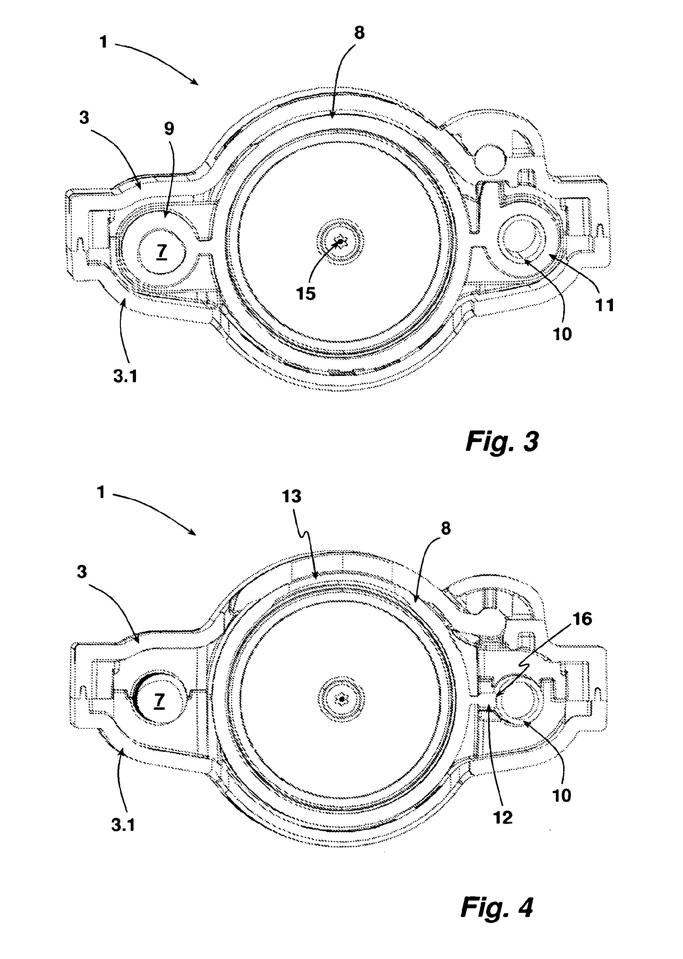

Figur 3 zeigt die Brüheinheit 1 in einem ersten Querschnitt. Erkennbar ist die Führungshülse 11 und das Einfassen der Führungsstange 10 durch dieselbe. Aus dieser Darstellung ist ebenfalls die diametrale Anordnung von Gewindespindel 7 und Führungsstange 10 in Bezug auf die Längsachse 15 des Brühzylinders 8 erkennbar.

Der weitere Querschnitt durch die Brüheinheit 1 gemäß Figur 4 zeigt die Führung des Brühzylinders 8 mittels der Führungsschiene 12 an der zu dem Brühzylinder 8 weisenden Mantelfläche der Führungsstange 10. Bei dem dargestellten Ausführungsbeispiel ist die Querschnittsfläche der Führungsstange 10 rund. Die Führungsschiene 12 - Gleiches gilt für die Führungsschiene 12.1 - verfügt über eine nicht gekrümmte Kontaktseite 16, mit der die Führungsschiene 12 an der Führungsstange 10 anliegt. Da die Führungsstange 10 gekrümmt ist, besteht zwischen diesen beiden Elementen - Führungsschiene 12 und Führungsstange 10 - ein Linienkontakt. Dieses ist gewünscht, um die Reibung zwischen diesen beiden genannten Elementen gering zu halten. Bei dem dargestellten Ausführungsbeispiel sind die Führungsschienen 12, 12.1 in Bezug auf ihre Abstützung und ihre Höhe in der durch die Längsachse der Spindel 7 und die Längsachse 15 des Brühzylinders 8 aufgespannten Ebene angeordnet.

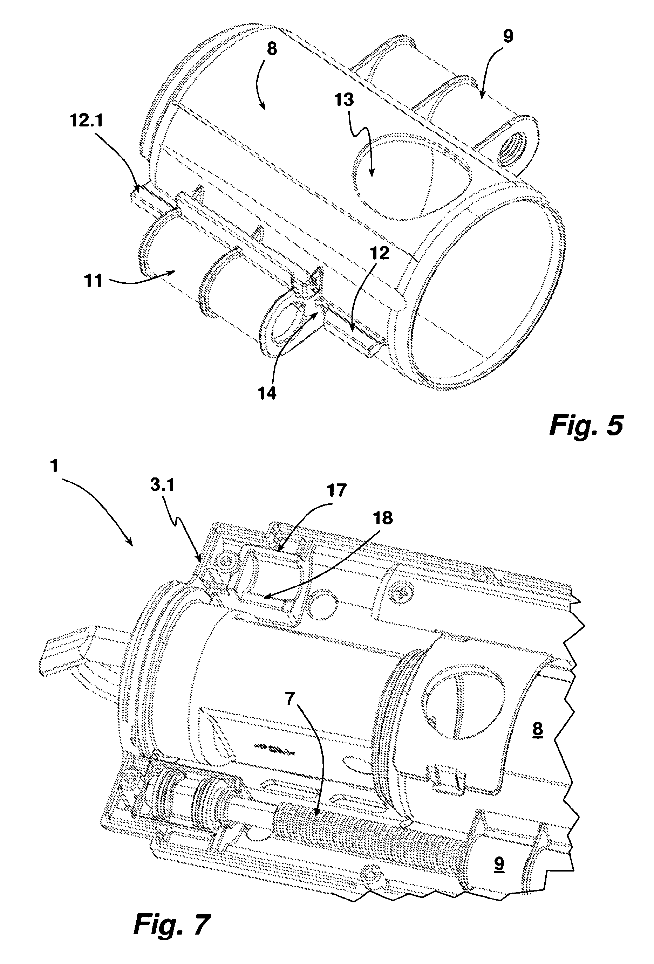

Der Brühzylinder 8 ist in Figur 5 in einer perspektivischen Darstellung mit seinen radial einander diametral gegenüberliegenden Elementen - auf der einen Seite dem Abtriebselement 9 und auf der anderen Seite der Führungshülse 11 sowie den Führungsschienen 12, 12.1 - abgebildet. Das in Figur 5 gezeigte Bauteil ist einstückig hergestellt worden. Erkennbar ist, dass sich die an der Führungsstange 10 geführten Führungselemente 11, 12, 12.1 im Wesentlichen über die gesamte Längserstreckung des Brühzylinders 8 erstrecken.

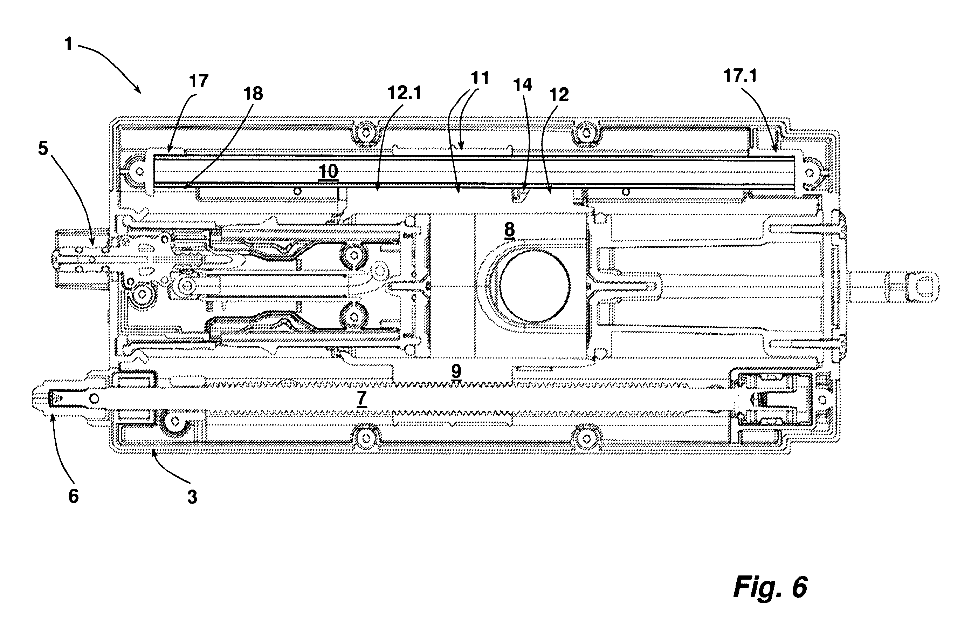

Der relativ lange Führungskontakt zwischen der Führungshülse 11 und den Führungsschienen 12, 12.1 mit der Führungsstange 10 ist der Längsschnittdarstellung der Figur 6 entnehmbar. In dieser Figur ist zudem die Halterung der Führungsstange 10 innerhalb des Gehäuses 2 der Brüheinheit 1 erkennbar. Die Führungsstange 10 ist endseitig jeweils in einer Haltemuffe 17, 17.1 gehalten. Die Haltemuffen 17, 17.1 werden durch zwei Halbschalen gebildet, wobei jede Halbschale einer Gehäuseschale 3 bzw. 3.1 zugeordnet ist. Figur 7 zeigt eine vergrößerte Darstellung der Haltemuffe 7 der Brüheinheit 1 als Teil der Gehäuseschale 3.1. Der Übersicht halber ist die Führungsstange 10 in Figur 7 nicht dargestellt. Die Haltemuffe 17 - Gleiches gilt für die Haltemuffe 17.1 - verfügt über eine in radialer Richtung zur Längsachse des Brühzylinders 8 weisenden Schlitz 18. Die lichte Weite des Schlitzes 18, von dem in Figur 7 lediglich die halbe Weite erkennbar ist, ist ausreichend, damit in diesen die Führungsschiene 12.1 bei entsprechender Verstellung des Brühzylinders 8 eingefahren werden kann. Dieses ermöglicht eine Abstützung der Brüheinheit 8 durch die Führungsschienen 12 bzw. 12.1 über die gesamte Länge der Führungsstange 10.

Die Brüheinheit 1 ist im Übrigen konzipiert wie die aus DE 20 2007 001 176 U1 bekannt gewordene Brüheinheit, wobei durch diese ausdrückliche Bezugnahme auf das genannte Gebrauchsmuster der Offenbarungsgehalt dieses Gebrauchsmusters zum Offenbarungsgehalt dieser Beschreibung gemacht wird. Dies betrifft insbesondere die Ausgestaltung der weiteren, im Zuge dieser Ausführungen nicht näher beschriebenen Elemente der Brüheinheit 1.

Die Erfindung ist anhand eines Ausführungsbeispiels erläutert worden. Ohne den Umfang der Ansprüche zu verlassen, ergeben sich für einen Fachmann zahlreiche weitere Ausgestaltungsmöglichkeiten, ohne dass diese im Einzelnen dargelegt werden müssten.

### Bezugszeichenliste

- 1: Brüheinheit
- 2: Gehäuse
- 3, 3.1: Gehäuseschale
- 4, 4.1: Führungsleiste
- 5: Kupplungsstück
- 6: Kupplungsstück
- 7: Gewindespindel
- 8: Brühzylinder
- 9: Abtriebselement
- 10: Führungsstange
- 11: Führungshülse
- 12, 12.1: Führungsschiene
- 13: Kaffeepulvereinfüllöffnung
- 14: Aussparung
- 15: Längsachse
- 16: Kontaktseite
- 17, 17.1: Haltemuffe
- 18: Schlitz

## Patentansprüche

1. Brüheinheit für eine Kaffeemaschine, umfassend einen in Richtung der Längsachse der Brüheinheit (1) bewegbar durch einen Spindelantrieb angetriebenen Brühzylinder (8), welcher Spindelantrieb über eine parallel und mit Abstand zur Längsachse (15) des Brühzylinders (8) angeordnete Gewindespindel (7) verfügt, deren Gewinde kämmend ein dem Brühzylinder (8) zugeordnetes Abtriebselement (9) zum Bewegen desselben angeordnet ist, sowie eine parallel und mit Abstand zur Gewindespindel (7) angeordnete Führungsstange (10) mit einer dem Brühzylinder (8) zugeordneten und darauf verschiebbaren Führungshülse (11), **dadurch gekennzeichnet, dass** der Brühzylinder (8) zusätzlich zu seiner Führungshülse (11) an seiner äußeren Mantelfläche wenigstens ein sich an der Führungsstange (10) bezogen auf ihren Umfang nur abschnittsweise abstützendes Führungselement (12, 12.1) trägt.

2. Brüheinheit nach Anspruch 1, **dadurch gekennzeichnet, dass** sich der Kontaktbereich zwischen dem zumindest einen Führungselement (12, 12.1) des Brühzylinders (8) und der Führungsstange (10) an der zu dem Brühzylinder (8) weisenden Seite der Führungsstange (10) befindet.

3. Brüheinheit nach Anspruch 1 oder 2, **dadurch gekennzeichnet, dass** die Gewindespindel (7) und die Führungsstange (10) einander bezüglich der Längsachse (15) des Brühzylinders (8) diametral gegenüberliegend angeordnet sind.

4. Brüheinheit nach Anspruch 3, **dadurch gekennzeichnet, dass** der Kontaktbereich zwischen dem zumindest einen Führungselement (12, 12.1) des Brühzylinders (8) und der Führungsstange (10) in der durch die Längsachse der Gewindespindel (7) und die Längsachse (15) des Brühzylinders (8) aufgespannten Ebene oder in etwa in dieser Ebene befindet.

5. Brüheinheit nach einem der Ansprüche 1 bis 4, **dadurch gekennzeichnet, dass** das zumindest eine Führungselement als Führungsschiene (12, 12.1) ausgeführt ist.

6. Brüheinheit nach Anspruch 5, **dadurch gekennzeichnet, dass** zwischen der zumindest einen Führungsschiene (12, 12.1) und der Führungsstange (10) ein Linienkontakt besteht.

7. Brüheinheit nach einem der Ansprüche 1 bis 6, **dadurch gekennzeichnet, dass** eine Führungsschiene (12) von der zu dieser weisenden Mündung der Führungshülse (11) beabstandet ist.

8. Brüheinheit nach einem der Ansprüche 1 bis 7, **dadurch gekennzeichnet, dass** der Brühzylinder (8) über zwei, durch die Führungshülse (11) voneinander beabstandete Führungsschienen (12, 12.1) oder Führungsschienenabschnitte verfügt.

9. Brüheinheit nach einem der Ansprüche 1 bis 8, **dadurch gekennzeichnet, dass** der Brühzylinder (8) ein durch ein Spritz- oder Pressverfahren hergestelltes Kunststoffteil ist.

10. Kaffeemaschine mit einer in diese in horizontaler Richtung einsetzbaren und aus dieser in umgekehrter Richtung herausnehmbaren Brüheinheit (1), **dadurch gekennzeichnet, dass** die Brüheinheit (1) die Merkmale eines oder mehrere der Ansprüche 1 bis 9 aufweist.

## Claims

1. Brewing unit for a coffee machine, comprising a brewing cylinder (8) driven movably in the direction of the longitudinal axis of the brewing unit (1) by a spindle drive, which spindle drive has a threaded spindle (7) arranged parallel and at a distance to the longitudinal axis (15) of the brewing cylinder (8), the thread of which is arranged meshing with a drive element (9) allocated to the brewing cylinder (8) to move it, and a guide rod (10) arranged parallel and at a distance to the threaded spindle (7) with a guiding sleeve (11) displaceable thereon and allocated to the brewing cylinder (8), **characterised in that** the brewing cylinder (8) in addition to its guiding sleeve (11) on its outer casing surface carries at least one guide element (12, 12.1) supported on the guide rod (10) only in segments in relation to its periphery.

2. Brewing unit according to claim 1, **characterised in that** the contact region between the at least one guide element (12, 12.1) of the brewing cylinder (8) and the guide rod (10) is on the side of the guide rod (10) facing the brewing cylinder (8).

3. Brewing unit according to claim 1 or 2, **characterised in that** the threaded spindle (7) and the guide rod (10) are arranged diametrically opposite to each other in relation to the longitudinal axis (15) of the brewing cylinder (8).

4. Brewing unit according to claim 3, **characterised in that** the contact region between the at least one guide element (12, 12.1) of the brewing cylinder (8) and the guide rod (10) lies in or approximately in the plane spanned by the longitudinal axis of the threaded spindle (7) and the longitudinal axis (15) of the brewing cylinder (8).

5. Brewing unit according to any one of claims 1 to 4, **characterised in that** the at least one guide element is formed as a guide rail (12, 12.1).

6. Brewing unit according to claim 5, **characterised in that** there is a linear contact between the at least one guide rail (12, 12.1) and the guide rod (10).

7. Brewing unit according to any one of claims 1 to 6, **characterised in that** a guide rail (12) is spaced from the opening of the guiding sleeve (11) pointing towards this.

8. Brewing unit according to any one of claims 1 to 7, **characterised in that** the brewing cylinder (8) has two guide rails (12, 12.1) or guide rail segments spaced apart by the guiding sleeve (11).

9. Brewing unit according to any one of claims 1 to 8, **characterised in that** the brewing cylinder (8) is a plastic part produced by injection moulding or pressing.

10. Coffee machine with a brewing unit (1) which can be inserted therein in a horizontal direction and removed therefrom in the reverse direction, **characterised in that** the brewing unit (1) has the features of one or more of claims 1 to 9.

## Revendications

1. Unité d'échaudage pour une machine à café comprenant un cylindre d'échaudage (8) mobile dans le sens de l'axe longitudinal de l'unité d'échaudage (1) grâce à un entraînement à broche, lequel entraînement à broche dispose d'une tige filetée (7) disposée parallèlement et à distance de l'axe longitudinal (15) du cylindre d'échaudage (8), dont le filetage est disposé pour s'engrener dans un élément de sortie (9) affecté au cylindre d'échaudage (8) afin de déplacer ce dernier, ainsi que d'une tige de guidage (10) disposée parallèlement et à distance de la tige filetée (7), avec une douille de guidage (11) affectée au cylindre d'échaudage (8) et qui peut être déplacée en translation sur ce dernier, **caractérisée en ce que** le cylindre d'échaudage (8) supporte, en plus de sa douille de guidage (11) sur sa surface d'enveloppe extérieure, au moins un élément de guidage (12, 12.1) qui s'appuie sur la tige de guidage (10) uniquement par tronçons si l'on se rapporte à sa circonférence.

2. Unité d'échaudage selon la revendication 1, **caractérisée en ce que** la zone de contact entre l'au moins un élément de guidage (12, 12.1) du cylindre d'échaudage (8) et la tige de guidage (10) se trouve sur le côté de la tige de guidage (10) orientée vers le cylindre d'échaudage (8).

3. Unité d'échaudage selon la revendication 1 ou 2, **caractérisée en ce que** la tige filetée (7) et la tige de guidage (10) sont disposées l'une par rapport à l'autre de façon diamétralement opposée par rapport à l'axe longitudinal (15) du cylindre d'échaudage (8).

4. Unité d'échaudage selon la revendication 3, **caractérisée en ce que** la zone de contact entre l'au moins un élément de guidage (12, 12.1) du cylindre d'échaudage (8) et de la tige de guidage (10) se trouve sur le plan défini par l'axe longitudinal de la tige filetée (7) et l'axe longitudinal (15) du cylindre d'échaudage (8=, ou à peu près sur ce plan.

5. Unité d'échaudage selon l'une des revendications 1 à 4, **caractérisée en ce que** l'au moins un élément de guidage est conformé en rail de guidage (12, 12.1).

6. Unité d'échaudage selon la revendication 5, **caractérisée en ce qu'**il y a un contact en ligne entre l'au moins un rail de guidage (12, 12.1) et la tige de guidage (10).

7. Unité d'échaudage selon l'une des revendications 1 à 6, **caractérisée en ce qu'**un rail de guidage (12) est situé à distance de l'embouchure de la douille de guidage (11) orientée vers ce dernier.

8. Unité d'échaudage selon l'une des revendications 1 à 7, **caractérisée en ce que** le cylindre d'échaudage (8) dispose de deux rails de guidage (12, 12.1) ou tronçons de rails de guidage, séparés l'un de l'autre par les douilles de guidage (11).

9. Unité d'échaudage selon l'une des revendications 1 à 8, **caractérisée en ce que** le cylindre d'échaudage (8) est une pièce en matière plastique fabriquée au cours d'un processus d'injection ou de moulage.

10. Machine à café comprenant une unité d'échaudage (1) amovible qui peut être mise en place dans cette dernière dans le sens horizontal et qui peut être extraite de cette dernière dans le sens opposé, **caractérisée en ce que** l'unité d'échaudage (1) présente les caractéristiques d'une ou de plusieurs revendications 1 à 9.
